# EUROPEAN PATENT SPECIFICATION

(11) **EP 2 125 905 B1**
(45) Date of publication and mention of the grant of the patent: **24.04.2013**
(21) Application number: 07857446.4
(22) Date of filing: 12.12.2007
(51) Int. Cl.: C08F 6/00, C08F 6/02, C08F 10/00

(54) **PROCESS FOR POLYOLEFIN FINISHING**
VERFAHREN ZUR ENDBEHANDLUNG VON POLYOLEFIN
PROCÉDÉ DE FINISSAGE DES POLYOLÉFINES

(30) Priority: 29.12.2006 EP 06127333
(43) Date of publication of application: 02.12.2009
(73) Proprietor: Basell Poliolefine Italia S.r.l., 20127 Milano (IT)
(72) Inventor: PENZO, Giuseppe, I-46047 Montanara Di Curtatone, Mantova (IT); RINALDI, Roberto, I-46100 Mantova (IT); MICHIELIN, Luciano, DECEASED (IT)
(74) Representative: Sacco, Marco
(86) International application number: PCT/EP2007/063783
(87) International publication number: WO 2008/080782

(56) References cited:
- WO-A2-2008/015228
- US-A- 3 920 624
- US-A- 4 758 654
- US-A- 4 859 733

## Description

The present invention relates to a process to perform the finishing of polyolefins granules to reduce the content of catalyst residues, unreacted monomers and volatile components in such polymers.

The use of catalysts with high activity and selectivity of the Ziegler-Natta type and, more recently, of the metallocene type has led to the widespread use on an industrial scale of processes in which the olefm polymerization is carried out in a liquid-phase or a gas-phase in the presence of a solid catalyst. A Ziegler-Natta catalyst comprises a solid catalytic component based on a transition metal compound, such as a titanium tetrachloride, and an organometallic compound acting as the catalyst activator, such as an aluminium alkyl compound.

Several reactions for polymerizing different olefins may be catalyzed by a Ziegler-Natta catalyst, thus producing homopolymers, copolymers or terpolymers. The obtained polymers contain residues of catalyst components, a certain quantity of unreacted monomers and other volatile compounds.

Moreover, when the olefin polymerization is carried out in the gas-phase, the presence of inert gases, such as propane, isobutane, isopentane or other saturated aliphatic hydrocarbons, has mainly the function of contributing to dissipate the heat generated inside the reactor from the polymerization reaction. Even these alkanes of low volatility may remain occluded and dissolved in the polyolefins particles.

For safety, economical and ecological reasons, there is the need to remove the unreacted (co)monomers, the organic compounds and alkanes of relatively low volatility from the produced polyolefm. All these compounds constitute a load on the environment, some of them are capable of forming explosive mixtures in the presence of atmospheric oxygen. Unconverted monomers represent also a risk of prolongation of uncontrolled residual polymerization outside the polymerization reactor. Moreover, the removal of unreacted monomers from the polymer allows their recovery and recycle to the polymerization reactor, thus saving the consumption of raw materials.

The removal of the above volatile compounds from the polymer is also necessary to obtain high quality polymer granules to be subjected to extrusion and pelletization, and also because the presence of such compounds into the polymers requires higher safety precautions for the downstream processes. Some catalyst components might react with air, water and additives, also with violent reactions, forming dangerous compounds, and possibly affecting the odour and the color of the obtained polymeric products.

Some processes are known for treating polymers with inert gas, for example nitrogen, to remove unreacted monomers and other volatile compounds from the polymer particles discharged from the reactor.

US 4,731,438 relates to a method for treating polymers by using a stream of nitrogen. A mixture of N₂ and water is used, in which the stripping agent is essentially N₂, while water has the function of deactivating the catalyst residues. A polymer is introduced at the top of a vertical vessel, so as to form a polymer bed descending through the vessel in plug flow conditions. The nitrogen stream containing water is fed to the bottom of the vertical vessel. By strictly controlling the operating conditions and the moisture inside the vessel, it is possible to establish and maintain a moisture front inside the polymer bed: below this moisture front the water concentration in the carrier gas is nearly equal to its inlet value, while above, the carrier gas is practically free of water. A drawback of this process is that the kinetics of stripping the unreacted monomers by means of nitrogen are very slow, so that the treatment requires a long residence time for the polymer inside the vessel, and therefore, bulky vessels are to be used.

US 4,314,053 and EP 0 341 540 also disclose processes where the polymer particles are treated with a stream of nitrogen enriched with steam, in an amount that the stripping agent is essentially nitrogen. Besides the mentioned low kinetics of stripping and the consequent high residence times, limits and drawbacks of the above methods derive from the difficulty in separating the low molecular weight monomers from nitrogen, so that complex, bulky and expensive apparatuses are required in the monomer recovery section of the polymerization plant. Therefore, the recovery and recycle of the unreacted monomers to the polymerization reactor becomes expensive and complex. Furthermore, in case of high boiling unreacted comonomers, such as 1-butene, 1-hexene, ethyliden-norbomene, the kinetics is even slower, and therefore the aforementioned problems are exacerbated. Another drawback is given by the fact that the prolonged times of treatment make the above methods not applicable to the finishing of sticky polymers, i.e. with a high tendency to agglomerate, which could cause the formation of polymer chunks inside the vessel.

EP 0 808 850 and EP 1 348 721 disclose methods for reducing the odor development in olefin polymers obtained by polymerization reactions catalyzed by means of metallocene catalysts.

According to the teaching of these patents the ligands having a cyclopentadienyl skeleton are sources of odor development. Said ligands can be efficiently removed by a method including a step of contacting the polyolefin with a ligand decomposer, such as water or alcohol, to decompose the residual ligands contained in the polyolefin, and then a step of removing the decomposed ligands by heating said polyolefin in a stream of inert gas, preferably nitrogen.

US 4,332,933 describes a method for treating a polymer powder to reduce its content of catalyst residues and volatile compounds. This method comprises flowing a stream of superheated steam at a temperature from 105 to 140°C over the polymer powder, and maintaining the polymer at said temperatures, so as to prevent any steam condensation. A stream of superheated steam is continuously introduced at the bottom of a vessel containing the polymer particles in fluidized conditions. The heat required to increase the temperature of the polymer to the temperature of 105-140°C is supplied to the system by suitable heat exchangers immersed in the fluidized polymer bed. Furthermore, the vessel walls are heated by external jackets in order to prevent the steam condensation. The required high temperatures to avoid the steam condensation and also the presence of heat exchangers protruding inside the polymer bed make this treatment completely not suitable to be applied to the finishing of sticky polymers, which would easily adhere to the internal heat exchangers and to the reactor walls.

US 3,920,624 describes a process for stripping residual volatile compounds, in particular the polymerization solvent, from polymer pellets by using steam as the stripping medium. In Example 3 saturated steam is described to be passed through a bed of polyethylene with a counter-current flow respect to the pellets flow. The stripping process of US 3,920,624 preferably deals with polymer pellets fed to the stripping vessel in an aqueous slurry. US 3,920,624 is mainly concerned with the removal of the polymerization solvent from polymer pellets and the polymer granules entering the stripping vessel are wet by the polymerization solvent. The process of US 3,920,624 is especially directed to removal of residual volatiles of cyclohexane and/or hexane, due to their presence in high density polyethylene. FIG. II of US 3,920,624 is a graph showing equilibrium data of the wet-stripping process when applied to pellets of high-density polyethylene (HDPE) containing residual cyclohexane solvent. In order to achieve a satisfying efficiency in the removal of the above mentioned polymerization solvents, the polymer residence time in the stripping process of US 3,920,624 has to be maintained to quite high values. Examples 1-3 of US 3,920,624 refer to the removal of cyclohexane. In example 3, that also deals with removal of n-hexane from HDPE pellets, the polymer hold-up time in the stripping vessel is of 4.6 hours in case of cyclohexane and similar values of polymer hold-up are experimented when removing n-hexane from HDPE pellets. Furthermore, claims 7 and 8 of US 3,920,624 state that the hold-up residence time of pellets in the moving bed is from 5 to 10 times the half-life of cyclohexane or n-hexane in the pellets. TABLE V on col. 15 indicates that the cyclohexane half-life in HDPE pellets is of 62-64 min, so that the polymer hold-up time in the process of US 3,920,624 is at the minimum of 310 min (62x 5).

US 4,859,733 suggests the use of saturated steam as a stripping agent, but also in this case with a quite long residence time) in the range of from 1 to 16 hours. In US 4,859,733 a stream of air is mentioned for use in drying the polymer particles.

US 4,758,654 describes a method that uses steam in a non-saturated form for removing unpolymerized gaseous monomers from a solid olefin polymer and then allowing the polymer in a settled bed to get in contact with a purge gas while flowing downward in substantially plug flow.

WO 2008/015228, which was published after the filling date of the present application, describes a process to perform the finishing of polyolefins produced by gas-phase catalytic polymerization of one or more α-olefins in the presence of a polymerization diluent selected from a C₃-C₅ alkane, wherein the polyolefin granules discharged from the gas-phase reactor are subjected to (1) a first degassing step in which said polyolefin is counter-currently contacted with a gaseous stream containing at least 85% by mol of a stripping agent selected from a C₃-C₅ alkane, said gaseous stream being continuously derived from the monomer recovery section of the polymerization plant; and (2) a second degassing step in which said polyolefin is counter-currently contacted with steam, the amount of steam being from 10 to 200 Kg per 1000 kg of polyolefin. Also in this case, the residence time of the polyolefin in the steam-treatment step is quite high. In fact, while a broad range is disclosed that spans from 10 minutes to 4 hours, the preferred range is of from 90 minutes to 3 hours and in the working examples a residence time of 90 minutes and 75 minutes is used.

It would be desirable to overcome the above drawbacks correlated with the use of nitrogen and/or superheated steam in the finishing of polyolefin granules.

The applicant has now found that the use of a stream of saturated steam reduces the content of catalyst residues and unreacted monomers in the polyolefin granules with a high efficiency, low residence times and low risk of polymer agglomeration, even if sticky polymers arc treated.

It is therefore a first object of the present invention a process to perform the finishing of a polyolefin produced by polymerization of one or more α-olefins, the process comprising:
(1) contacting a polyolefin discharged from a polymerization reactor with a counter-current flow of saturated steam, so as to strip away the gases from said polyolefin and to form condensed steam on the particles of said polyolefin, whereby the polyolefin granules are introduced in the upper portion of a steamer and fall down by gravity counter-currently contacting a stream of saturated steam introduced at the bottom of the steamer, and wherein the amount of said saturated steam ranges from 30 to 150 Kg per 1000 kg of polyolefin;
(2) drying the polyolefin particles by means of a counter-current flow of a dry inert gas, said flow of dry inert gas maintaining the polyolefin particles in fluidization conditions, the evaporation of said condensed steam cooling the polyolefin;
wherein the residence time of said polyolefin in step (1) is comprised between 10 and 45 minutes.

The purpose of the present invention is to achieve an efficient deactivation of catalyst components and removal of unreacted monomers and heavy hydrocarbons from polyolefin powder discharged from a polymerization reactor. The process of the invention also represents a satisfactory method to carry out the finishing of sticky polymers.

A "sticky polymer" is defined as a polymer which, although particulate at temperature below the sticking temperature, agglomerates at temperatures above the sticking temperature. The "sticking temperature", generally referred to polymer particles in a fluidized bed or in a packed bed, is defined as the temperature at which the fluidization or the flowability of the polymer ceases, or is considerably reduced, due to the agglomeration of the particles in the polymer bed.

The use of saturated steam in the first step (1) has the duplex effect of removing the unreacted monomers from the polymer, and also of deactivating the catalyst residues. Moreover, differently from nitrogen, saturated steam ensures high kinetics of stripping away the residual unconverted monomers, and accordingly low residence times of the polymer in step (1) of the invention.

During step (1) the saturated steam partially condenses on contact with the polymer particles, thus forming a layer of water thereon. Such layer of water reveals of remarkable importance since it prevents from any agglomeration of the polymer particles, so that also particularly sticky polymers may be efficiently finished with the method of present invention. As a consequence, the presence of said water layer allows to treat sticky polymers at even relatively high temperatures, without having polymer softening and agglomeration.

Owing to the partial condensation of steam, the polyolefin is subjected to heating due to the release of the condensation latent heat, so that their temperature increases during step (1). On the contrary, during the drying step (2) the above layer of water surrounding the polymer granules is evaporated by the contact with the flow of inert gas, thus absorbing heat from the polymer, so that the polymer temperature decreases during step (2).

In view of the above, the operative conditions established in steps (1) and (2) of the invention are such to have at the outlet from the drying step a polymer temperature which is close to the polymer temperature at the inlet of the steaming step. This means that the polymer exits from the finishing section at a temperature which is not far from the temperature at which the polymer is discharged from the polymerization reactor.

According to a preferred embodiment of the invention, at the inlet of steaming step (1) the polyolefin temperature is substantially similar to the operative temperature in the polymerization reactor, i.e. ranging from 60 to 95°C. At the outlet of step (1) and at the inlet of drying step (2) the polyolefin temperature is increased at values from 90 to 110°C. Finally, at the outlet of the drying step the polyolefin temperature ranges from 75 to 95°C.

In step (1) the polyolefin is counter-currently contacted with saturated steam as the stripping agent. The polyolefm granules are introduced in the upper portion of a steamer and fall down by gravity counter-currently contacting a stream of saturated steam introduced at the bottom of the steamer.

An amount of saturated steam in the range from 30 to 150 Kg per 1000 kg of polyolefin is used in step (1). A preferred range for said amount of saturated steam is from 50 to 100 Kg per 1000 kg of polyolefin. This relatively high amount gives evidence that steam has not only the function of deactivating the catalyst components, in particular the organo-aluminum compounds of the catalyst system, but also the function of removing from the polyolefin granules the unreacted monomers, lower alkanes C₂-C₆ and heavy hydrocarbons.

Of course, the flow rate of saturated steam which is fed to step (1) must exceed the amount of steam subjected to condensation on the polymer particles, so that the uncondensed steam can ensure a suitable stripping of unconverted monomers from the polymer. Generally, the total amount of saturated steam fed to step (1) exceeds of at least 50% by weight the amount of steam subjected to condensation on the polyolefin particles. Preferably, the total feeding of saturated steam in step (1) exceeds from 70 to 100% by weight the amount of steam condensing on the polyolefin.

Steam fed in the steamer of step (1) is usually low-pressure steam (3-5 bar), at a temperature such to maintain it in saturated conditions (120-140°C).

The temperature inside the steamer of step (1) can be adjusted at a value from 95 to 120°C, preferably 100-110°C. The absolute pressure inside the steamer can range from 1 to 4 bar, preferably from 1.1 to 1.5 absolute bar.

At the operative temperatures maintained in step (1), the kinetics of the stripping reaction are considerably increased. The unreacted monomers are stripped by the saturated steam and the catalyst residues are deactivated by the steam in a very short period of time compared with the time required by prior art methods. The great diffusivity of steam through the polymer and the plug flow conditions make the treatment efficient at residence times of the polymer in step (1) comprised between 10 minutes and 45 minutes, preferably from 15 minutes to 35 minutes. Accordingly, vessels with reduced dimensions may be used.

In a further embodiment, the stream of saturated steam of step (1) can be also comprise an inert gas, such as nitrogen, provided that the amount of said inert gas is lower that 20% by weight, so that the saturated steam is the main stripping agent.

According to a preferred embodiment of the invention, the steaming step and the drying steps are continuously performed in a sequence of two separated vessel. In this case, it is possible to adjust independently and separately the operative parameters, such as temperature, pressure, gas flow rate, polymer flow rate, residence times, both in the first vessel and in the second vessel, thus establishing in the sequence of steaming and drying vessels the conditions for improving the kinetics of the two different steps (1) and (2). Therefore, the overall efficiency of the finishing method is greatly improved and the overall dimension of the finishing apparatuses may be greatly reduced.

Preferably, the polyolefin encountering the flow of saturated steam descends through the vessel in "plug flow" conditions. Due to the presence of the layer of condensed steam and its lubricating effect on the polymer surface, it is possible to use "plug flow" conditions of the polymer without having the formation of polymer chunks in the first vessel. The use of a packed polymer moving in a plug flow allows to further reduce the size of the steaming vessel of step (1).

Steam is withdrawn from step (1) enriched in the removed gaseous organic compounds. Another advantage of the finishing process of the invention resides in that the recover of unreacted monomers from the steam downstream step (1) is technically simply and does not require expensive separation steps.

As regards the drying step (2), the operative conditions are such to maintain the polymer granules in fluidization conditions by means of an upward flow of a dry inert gas. Hot dry nitrogen is preferably used to remove water from the polymer granules.

Dry nitrogen is continuously fed to step (2) at a temperature comprised between about 85°C and 115°C, said temperature being selected taking into account the particular polymer to be treated, so as to avoid any softening of the polymer, and subsequently any obstruction in the drier.

The polymer has a low residence time in the drying step (2), which is comprised between about 2 and about 15 min, preferably between 4 and 10 minutes. Due to the fluidization conditions of the polymer, it is possible to avoid channelling, ensuring a complete removal of water from the polymer at low residence times.

Hot pure nitrogen is fed at the bottom of the drier performing step (2) and a stream of nitrogen enriched with steam is withdrawn from the upper part of the drier: the separation of steam from the impure nitrogen is technically simply and does not require expensive separation steps. Said impure nitrogen is subjected to compression and successive cooling to condensate the steam, and after the condensate has been separated off in a liquid separator, the purified nitrogen is heated in a heat exchanger at the suitable temperature and again reintroduced at the bottom of the drier, thus forming a hot nitrogen closed loop.

The dried polyolefin discharged from step (2) is substantially free from unreacted monomers, volatile compounds and catalyst residues, has a very high quality and can be processed in subsequent processing operations. The gas phase released from the polyolefin comprises mainly the unreacted olefins, which are present both in the space between the polymer particles and also dissolved in the polyolefin pores. The process of the invention allows to reduce the content of gaseous hydrocarbons inside the polyolefin at values of less than 20 ppm by weight.

The invention will be better understood and carried into effect with reference to the attached drawings in which an embodiment of the invention is shown by way of non-limiting example, in which:
Figure 1 is a schematic partial view of a process for finishing a polyolefin according the steps of steaming and drying of present invention;
Figure 2 is a schematic view of a steamer for carrying out step (1) of present invention;
Figure 3 is an enlarged view of a distribution ring for feeding saturated steam in the steamer of Figure 2;
Figure 4 is a schematic front view of a preferred drier performing step (2) of present invention;
Figure 5 is a perspective view of the preferred drier of Figure 4.

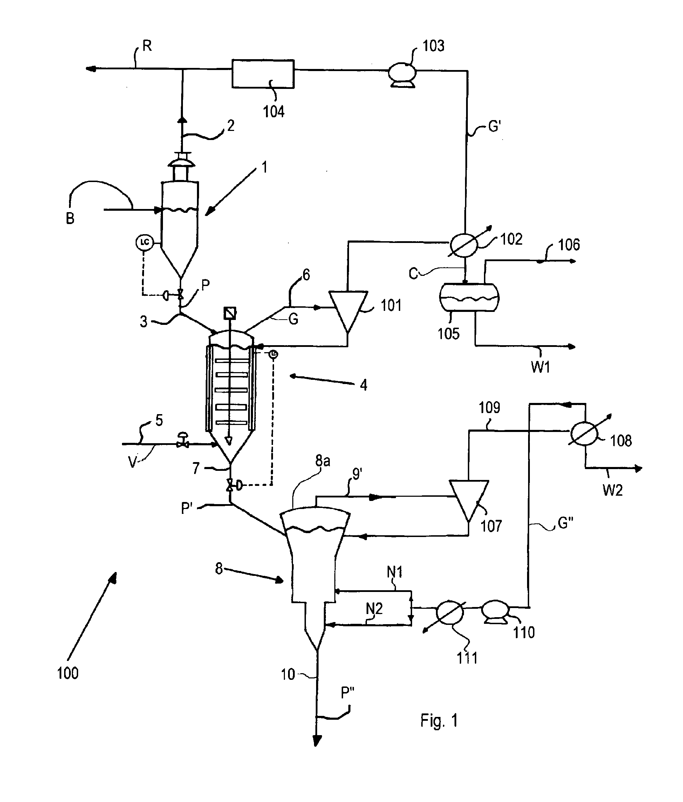

By way of an example, reference is made in Fig. 1 to a plant for producing polyolefins, such as propylene homopolymers or copolymers using a Ziegler-Natta catalyst system.

In such plants the polymerization reaction may be performed in a single or in multiple step, or in any one of the known methods, for example as described in EP 0 517 183.

With reference to Figure 1, there are shown finishing apparatuses 100 used in a finishing zone of a plant for producing polymers, the finishing apparatuses comprising a flash chamber 1, a first vessel 4 in which the polymer is treated with saturated steam, a second vessel 8 in which the polymer is dried with dry nitrogen.

A product B containing polymer granules is discharged from a polymerization process performed in the gas phase, or alternatively, in the liquid phase.

The product B comprises polymer granules together with the unreacted monomers and catalysts residues, which must be removed from the polymer using the finishing process of the invention. The polymer granules have preferably a spherical shape, with dimensions of about 0.3-4 mm, great roughness, and therefore high specific surface.

If crystalline polymers are treated in the flash chamber 1, a temperature of about 100-110°C may be reached, on the other hand if very sticky polymers are treated, the temperature may be maintained at about 60-90°C. In any case, the temperature in the flash chamber 1 is kept at values such to avoid the softening of the polymer powder. Owing to the above mentioned operative conditions, a part of the gaseous phase present in the product B, mainly the unreacted monomers, are volatilized from the solid polymer.

The gases separated from the product B leave the flash chamber 1 through the gas line 2 from the upper zone of the chamber 1, and are recycled by the recycle line R to the polymerization reactor after compression, whereas the polymer P leaves the bottom of the flash chamber 1 via the feed line 3 and is fed at the top of a steamer 4 to carry out the steaming step (1) of present invention. At the bottom of the steamer 4 the saturated steam V is fed through the steam line 5.

Volatile gaseous compounds G, released from the polymer P, are extracted from the head of the steamer 4 via line 6. A purified polymer P' is discharged from the bottom of the steamer 4.

The gaseous compounds G contain steam, unreacted monomers, and high boiling catalyst components coming from the catalyst system. The separation of the gaseous components from the steam is simple and efficient: it may be carried out according to known methods, and does not require bulky or complex apparatuses. Such separation allows, from one hand, the recover and recycle of the unreacted monomers to the polymerization reactor and, on the other hand, to obtain water.

The stream G is firstly fed to a cyclone separator 101 for separating therefrom fine polymer particles entrained with the gaseous stream G. Said fine particles are reintroduced into the steamer 4, whilst the gaseous compounds are fed to a condenser 102, in which the gaseous compounds are cooled to cause the condensation of the steam and heavier hydrocarbons, so as to obtain a gaseous fraction G' and a condensed fraction C.

The gaseous fraction G' is fed to a compressor 103 and then to a drier 104 and thereafter mixed with the gas line 2 coming from the flash chamber 1, and hence recycled back to the polymerization reactor through the recycle line R.

The condensed fraction C is fed to a gravity separator 105 in which the high molecular weight hydrocarbons 106 are separated from the aqueous phase W1. The aqueous phase W1 can be discharged in a water reservoir after being purified from the presence of residual hydrocarbons.

The polymer P' withdrawn from the bottom of the steamer 4 is fed via line 7 to the head portion 8a of a drier 8, whilst a flow of inert gas, preferably hot nitrogen, is fed to the bottom portion of the drier 8 via lines N1 and N2. The inert gas allows to remove from the polymer particles the steam previously condensed on the polymer granules in the steamer 4. A dried polymer P" is discharged from the bottom of the drier 8 through line 10. From the upper zone of the drier 8 a gaseous stream 9' is obtained, said gaseous stream containing mainly nitrogen, together with steam.

The gaseous stream 9' is then fed to a further cyclone separator 107, in which the fine particles are separated from the gas: said fines are recycled to the top of the drier 8, whilst the gaseous phase 109 is fed to a further condenser 108, in which the steam is condensed and separated as water W2 from the nitrogen. The obtained stream of water W2 may be discharged in the water reservoir, while nitrogen is sent via line G" to the compressor 110, heated by means of heat exchanger 111, and then recycled via lines N1 and N2 at the bottom part of the drier 8.

The polymer P" discharged from the drier 8 is free from water, volatile compounds and catalyst residues, has a high degree of purity, and may be processed in subsequent processing operations. The polymer P" is almost at the same temperature of the product B fed to the finishing process, and may be used in downstream processes without being subjected to any other treatment.

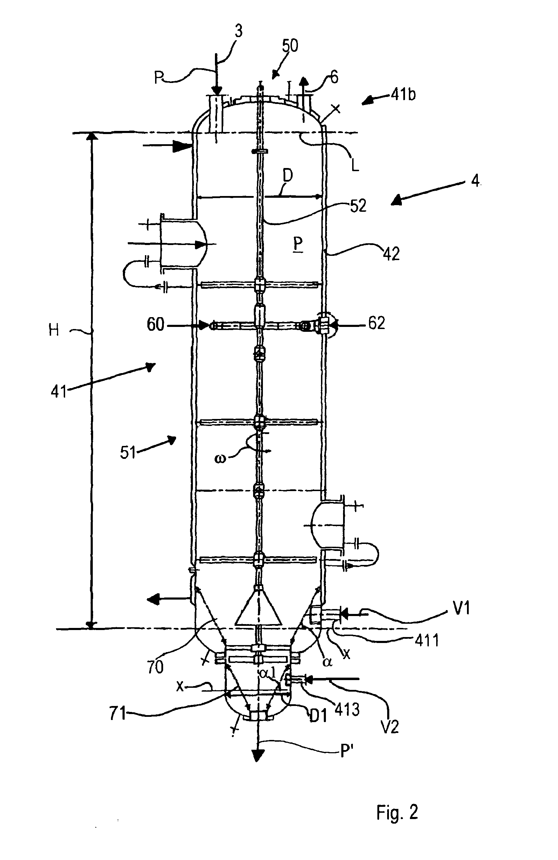

With reference to Figure 2, it is shown the steamer 4 comprising a substantially vertical cylindrical tank 41, provided with a head portion 41b and a bottom portion comprising a first inlet 411 for a first stream V1 of saturated steam and a second inlet 413 for a second stream of saturated steam V2.

At the head portion 41b of the steamer 4 the polymer P is fed through the feed line 3, and the polymer granules P flow downwardly in the cylindrical tank 41 substantially in plug flow conditions.

The steamer 4 is provided with an external jacket 42 so shaped to envelop almost completely the lateral surface of the cylindrical tank 41, heating steam flowing inside said external jacket 42. A stirring device 50 for stirring the polymer P in the steamer 4 is also provided. The dimensions of the steamer 4 are so chosen that the ratio between the height H and the diameter D are of about H/D=3, preferably H/D>3.

The stirring device 50 may be a mechanical stirrer rotating at an angular velocity ω between 1 and 20 rpm, and comprises a shaft 52 supporting a plurality of blades 51, suitably spaced apart each other along the shaft 52. The stirring device 50 agitates the polymer P flowing downwardly into the steamer 4. The plurality of blades 51 are preferably arranged along the shaft 52 so that all the blades are immersed into the polymer bed. The stirring device 50 agitates the polymer into the cylindrical tank 41 causing a weak local shear of the polymer P and avoiding channelling and short-cut of the saturated steam, which would lead to nonhomogeneous stripping reactions.

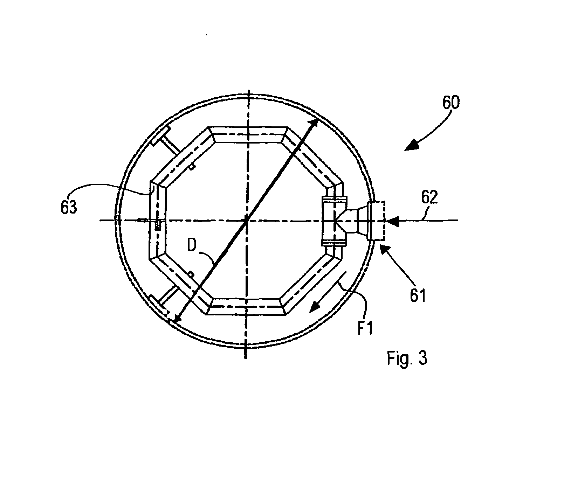

Further saturated steam is fed into the steamer 4 by means of a steam distribution ring 60 arranged along the shaft 52 and better shown in Figure 3. As indicated in Fig. 3, further saturated steam coming from steam line 62 is fed to an inlet portion 61 of the steam distribution ring 60 and flows through a circular conduit 63 provided inside the steam distribution ring 60 towards the direction indicated by the arrow F1. Said saturated steam exits from the holes provided on a lower surface of the steam conduit 63. Said further feed of steam by means of distribution ring 60 helps to maintain the polymer P at the desired values of temperature and pressure in the steamer 4.

The saturated steam meets the polymer P in a counter current, stripping away the unreacted monomers and also deactivating the catalyst residues. The first stream V1 of steam is distributed in the bottom part of the steamer 4 through a first distribution grid 70, while the steam of the second stream V2 is distributed in the bottom part of the steamer 4 through a second distribution grid 71. Both the first and the second distribution grids 70 and 71 are provided with distribution holes, so arranged that respectively the first stream V1 and the second stream V2 of steam are directed from the periphery of the cylindrical tank 41 to the central part thereof.

The first distribution grid 70 and the second distribution grid 71 are tilted in relation to the horizontal direction "x" respectively of an angle α, and an angle α1, so as to allow the polymer to descent due to gravity, and to prevent obstructions in the holes of the grids. The values of the angles α and α1 are chosen taking onto account the necessity of preventing obstructions, and/or flooding in the steamer 4, and also the necessity of limiting the overall dimensions of the steamer. Generally the angles α and α1 are greater than a rest angle θ of the treated polymer, defined with respect to the horizontal direction "x".

The saturated steam diffuses homogeneously into the steamer 4 and counter-currently contacts the polymer particles descending through the steamer 4. A certain amount of saturated steam condenses on the surface of the polymer particles in a very short period of time. Therefore, a water layer is formed on the polymer: the presence of said water layer on the polymer granules combined with the local weak shear caused by the stirring device 50 allows to prevent polymer agglomeration and thus obstructions in the steamer 4.

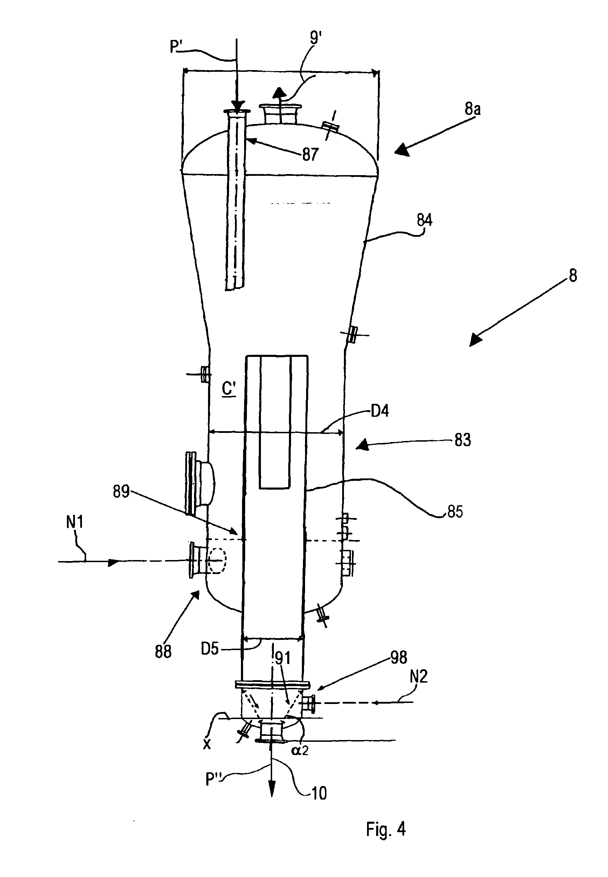

Fig. 4 shows a preferred and non limitative embodiment of the drier 8 shown in Fig.1. The drier 8 is provided with a head portion 8a, a central body 83 having a substantially cylindrical shape, a velocity reduction zone 84 interposed between the head portion 8a and the central body 83, and an internal vertical pipe 85 with a diameter D5 lower than diameter D4 of the central body 83.

The polymer particles P' coming from the steamer 4 are fed to the drier 8 by means of a long feed conduit 87, which protrudes inside the velocity reduction zone 84 of the drier 8. The feed conduit 87 is particularly prolonged, in order to minimize the amount of polymer particles eventually entrained with the gas stream exiting through the outlet 9' of the drier 8. The polymer particles are maintained inside the drier 8 in fluidization conditions by the upwardly flow of hot nitrogen, fed to the bottom of the drier 8. The velocity reduction zone 84 is shaped so as to diverge from the central body 83 up to the head portion 8a: this allows to reduce the velocity of the fluidizing gas in the zone 84, thus minimizing the fraction of fines which can be entrained by the gas exiting through the outlet 9'.

A first stream N₁ of hot nitrogen, as the drying gas, is fed to the drier 8 at an inlet 88 arranged at the bottom of the central body 83 and distributed in the drier 8 through a first distribution grid 89 having an annular shape. A second stream N₂ of hot nitrogen is fed at the inlet 98 arranged at the bottom of vertical pipe 85 and distributed in the vertical pipe 85 through a distribution grid 91. Said grid 91 is tilted, with respect to the horizontal direction x, of angle α₂ higher than a rest angle of the treated polymer, so as to allow the polymer to descent due to gravity and to prevent obstructions in the bottom of the drier 8. Both the first distribution grid 89 and the second distribution grid 91 are provided with a plurality of distribution holes for distributing respectively the first stream N1 and the second stream N2 of nitrogen in the drier 8.

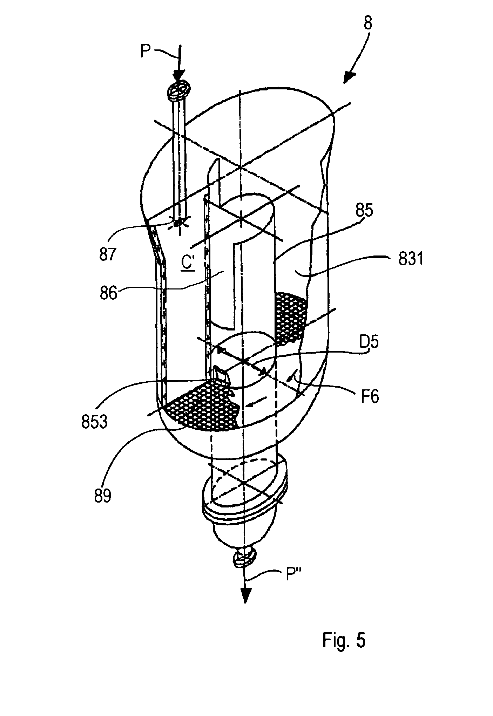

As better shown in Figure 5, the internal vertical pipe 85 has a substantially cylindrical shape and it is concentric to the central body 83. The vertical pipe 85 is arranged so as to extend upwardly in the central body 83, so that the area comprised between the vertical pipe 85 and the central body 83 defines an annular chamber 831. The vertical pipe 85 is provided with an opening 853 placed just above the first distribution grid 89, said opening 853 having the function of emptying the annular chamber 831 in case of emergency stop.

The insertion of the vertical pipe 85 inside the central body 83 generates two distinct drying chambers in the drier 8, a first drying chamber 831 of annular shape and a second drying chamber of cylindrical shape, which is arranged inside the vertical pipe 85. The polymer particles to be dried are maintained in fluidization conditions in the annular chamber 831 and successively, in a random manner, the polymer granules falls down in the vertical pipe 85 passing through a notching 86, which is formed in the upper part of the vertical pipe 85. After their passage through the notching 86 the polymer particles enters the vertical pipe 85 and, being not more subjected to fluidization conditions, they flow downward along the vertical pipe 85 in plug flow conditions.

In synthesis, the polymer P' is continuously maintained in fluidization conditions in the annular chamber 831 by the upward flow of hot nitrogen fed through the first distribution grid 89. Owing to the particular arrangement of the distribution holes in the grid 89 the nitrogen flows up circumferentially as indicated by the arrow F6 in Figure 5, with a coiled movement inside the annular chamber 831. As a consequence, also the polymer granules are fluidized upwardly in the annular chamber 831 with a coiled movement caused by the upward flow of nitrogen.

Once passed through the notching 86, the polymer granules descend along the vertical pipe 85 in plug flow conditions counter-currently contacting the second stream N₂ of hot nitrogen fed via the inlet 98 and distributed through the second distribution grid 91.

A polymer P", substantially free from water is discharged from the bottom of the drier 8. The water formed on the polymer in the steamer 4 by the condensation of the saturated steam, totally evaporates in the drying chambers of the drier 8, flowing upwardly together with the nitrogen up to reach the gas outlet 9 shown in Fig. 4. During the drying step the polymer P' is subjected to cooling due to evaporation of the water surrounding the polymer particles.

The polymer granules discharged from the bottom of the drier 8 are free from water, unreacted monomers, other volatile compounds and catalyst residues. The high degree of purity makes the polymer suitable to be processed in the downstream process steps, such as extrusion and pelletization.

The following examples will further illustrate the present invention.

### EXAMPLES

### Characterization

**Measurement of the content of gaseous hydrocarbons dissolved in the manufactured polyolefin:** it is performed according to the "static head-space" extraction method.

This method consists in heating a sample of 3 g of polyolefin in a capped flask at a temperature of 90°C for 120 minutes. The gaseous mixture released from the sample of polymer is then injected into a gas chromatography apparatus to detect the different organic compounds. The measurement of the detected hydrocarbons is expressed in micrograms per gram of (co)polymer, i.e. in parts per million (ppm) by weight.

### Example 1

### Polymerization conditions

Polypropylene is produced by means of slurry polymerization of the liquid monomer in a loop reactor.

A Ziegler-Natta catalyst is used as the polymerization catalyst, comprising:
- a titanium solid catalyst component prepared with the procedure described in WO 00/63261, Example 10, according to which diethyl 2,3-diisopropyl-succinate is used as an internal donor compound;
- triethylaluminium (TEAL) as a cocatalyst;
- dicyclopentyldimethoxysilane as an external donor.

Propylene is polymerized in the loop reactor using H₂ as the molecular weight regulator. No comonomer is fed to this reactor. Make-up propylene and hydrogen were continuously fed to the loop reactor. The polymerization of propylene is carried out at a temperature of 70°C and a pressure of 34 absolute bar.

The polypropylene slurry, continuously discharged from the loop reactor, is forced to flow inside a jacketed pipe wherein it is heated up to reach a temperature of 85°C with consequent evaporation of the liquid phase. Successively the obtained stream of polypropylene and evaporated monomer is introduced in a flash tank (reference 1 in Fig.1), where the evaporated monomer is separated from the polymer particles.

### Steaming step a)

30000 Kg/h of polypropylene are continuously discharged from the bottom of the flash tank 1 and are conveyed to the top of a steamer (reference 4 in Fig. 1) to carry out the steaming step of present invention.

500 g of polypropylene powder are taken upstream the steamer and are partitioned so as to withdraw a representative sample of 3 g, which is subjected to "static head-space" extraction to quantify the amount of gaseous hydrocarbons dissolved in the polymer particles. An amount of gaseous components equal to 2500 ppm by weight is measured.

The temperature of polymer particles at the inlet of the steamer 4 is of about 70°C. Saturated steam is fed mostly at the bottom of the steamer 4 with a total flow rate equal to 1800 Kg/h, corresponding to 60 Kg of steam per 1000 kg of polyolefin to be treated. This total amount of saturated steam is fed to the steamer 4 by means of feeding lines 411, 413 and 62 shown in Fig. 2 of present description.

The polymer particles fall down by gravity along the steamer, thus contacting in a counter current the upward flow of saturated steam. The operative conditions are such to maintain in the steamer a temperature of 105°C and a pressure of 1.2 absolute bar. The average residence time of the polymer in the steamer is of 20 minutes.

Under the above indicated operative conditions, about 1000 kg/h of steam are subjected to condensation, with a high probability of forming water layers around the polyolefin particles. The remaining amount of saturated steam acts as the stripping agent and is discharged from the top of the steamer 4.

Steam enriched in gaseous hydrocarbons, mainly propylene and propane, is discharged from the top of the steamer and, as shown in Fig 1, said gaseous mixture is conveyed to a cyclone separator 101 and to a condenser 102 to separate water from the unreacted propylene, which can be recycled back to the loop polymerization reactor.

The polypropylene particles withdrawn from the bottom of the steamer are conveyed to the drying step of the present invention.

### Drying step b)

The polypropylene particles enter the upper portion of the drier 8 at a temperature of 105°C. Inside the drier the polymer particles are maintained in fluidization conditions by an upward flow of dry nitrogen. About 15000 m³/h of nitrogen at a temperature of 110°C are fed to a fluidization grid placed at the bottom part of the drier 8. The contact with dry nitrogen causes the evaporation of the water surrounding the polyolefin particles, which is also causing the polymer cooling during step b) of present invention. In fact, the polyolefin temperature at the outlet of the drier is lowered to the value of 78°C.

The residence time of the polymer in the drier is of 12 minutes. From the top of the drier 8 a stream of nitrogen enriched with steam is obtained, which is subjected to condensation to separate the steam from nitrogen. The separated nitrogen is then compressed, heated in a heat exchanger and again reintroduced at the bottom of the drier 8, thus forming a hot nitrogen closed loop.

500 g of dried polyolefin are taken downstream the drier and are partitioned so as to withdraw a representative sample of 3 g, which is subjected to "static head-space" extraction. The enclosed Table 1 indicates, in parts per million (ppm) by weight per gram of polymer, the residual amounts of hydrocarbons dissolved in the polymer particles. As shown in Table 1, said residual amount is equal to 12 ppm by weight.

### Example 2

### Polymerization conditions

A propylene/ethylene/1-butene copolymer is produced by means of slurry polymerization of the liquid monomers in a loop reactor. The same Ziegler-Natta catalyst of Example 1 is used. Propylene is the main monomer, while ethylene and 1-butene are fed to the loop reactor, so as to obtain a final propylene copolymer containing 2.5% by weight of ethylene and 4.8% by weight of 1-butene. As known to the person skilled in the art, this polyolefin copolymer may be considered as a sticky polymer, being easily subjected to agglomeration of the particles if the polymer flows at a temperature exceeding a predefined value.

The slurry polymerization in the loop reactor is carried out at a temperature of 62°C and a pressure of 34 absolute bar.

The copolymer slurry, continuously discharged from the loop reactor, is forced to flow inside a jacketed pipe wherein it is heated up to reach a temperature of 78°C with consequent evaporation of the liquid phase. Successively the obtained stream of polypropylene and evaporated monomers is introduced in a flash tank, where the evaporated monomers are separated from the polymer particles.

### Steaming step a)

20000 Kg/h of copolymer are continuously discharged from the bottom of the flash tank and are conveyed to the top of the steamer 4.

500 g of polypropylene powder are taken upstream the steamer and are partitioned so as to withdraw a representative sample of 3 g, which is subjected to "static head-space" extraction to quantify the amount of gaseous hydrocarbons dissolved in the polymer particles. An amount of gaseous components equal to 2130 ppm by weight is measured.

The temperature of the polyolefin entering the steamer is of about 65°C. The total flow rate of saturated steam fed to the steamer 4 is equal to 1800 Kg/h, corresponding to 90 Kg of steam per 1000 kg of polyolefin to be treated. The saturated steam is fed to the steamer 4 by means of feeding lines 411, 413 and 62 shown in Fig. 2 of present description.

The polymer particles fall down by gravity along the steamer, thus contacting in a counter current the flow of saturated steam. The operative conditions are such to maintain in the steamer a temperature of 105°C and a pressure of 1.2 absolute bar. The average residence time of the polymer in the steamer is of 30 minutes.

Under the above indicated operative conditions, about 860 kg/h of steam are subjected to condensation, with a high probability of forming water layers around the polyolefin particles. The remaining amount of saturated steam acts as the stripping agent and is discharged from the top of the steamer 4.

Steam enriched in gaseous hydrocarbons, mainly ethylene, propylene, 1-butene and propane, is discharged from the top of the steamer and, as shown in Fig 1, said gaseous mixture is conveyed to a cyclone separator 101 and to a condenser 102 to separate water from the unreacted (co)monomers, which can be recycled back to the loop polymerization reactor. The polyolefin particles withdrawn from the bottom of the steamer are conveyed to the drying step of the present invention.

### Drying step b)

The polyolefin enter the upper portion of the drier 8 at a temperature of 105°C. Inside the drier the polymer particles are maintained in fluidization conditions by an upward flow of nitrogen. About 13000 m³/h of nitrogen at a temperature of 110°C are fed to a fluidization grid placed at the bottom part of the drier 8. The contact with hot nitrogen causes the evaporation of the water layer surrounding the particles, so that the polymer is cooled during step b) of present invention. The polyolefin temperature at the outlet of the drier is lowered to about 72°C.

The residence time of the polymer in the drier is of 17 minutes. From the top of the drier 8 a stream of nitrogen enriched with steam is obtained, which is subjected to condensation to separate the steam from nitrogen.

500 g of dried polyolefin are taken downstream the drier and are partitioned so as to withdraw a representative sample of 3 g, which is subjected to "static head-space" extraction. The enclosed Table 1 indicates, in parts per million (ppm) by weight per gram of polymer, the residual amounts of hydrocarbons dissolved in the polymer particles. As shown in Table 1, said residual amount is equal to 8 ppm by weight.

Therefore, in case of a sticky polyolefin, the finishing process of the invention allows to reduce with a high efficiency the residual concentration of hydrocarbons in the polyolefin without having problems of polymer flowability during the steaming step.

### Example 3 (Comparative)

The same propylene/ethylene/1-butene copolymer obtained by the polymerization process as described in Example 2, is subjected to a steaming step, with the difference that superheated steam is flowed upwards along the steamer.

### Steaming step a)

20000 Kg/h of the same copolymer of Example 2 are continuously introduced at the top of the steamer at a temperature of about 65°C.

1800 Kg/h of steam in superheated conditions are fed to the steamer 4, corresponding to 90 Kg of steam per 1000 kg of polyolefin to be treated. This total amount of superheated steam is fed by means of feeding lines 411, 413 and 62 shown in Fig. 2.

The polymer particles fall down by gravity along the steamer, thus contacting in a counter current the superheated steam. The operative conditions are such to maintain in the steamer a temperature of 120°C and a pressure of 1.2 absolute bar. The average residence time of the polymer in the steamer is of 30 minutes. Under the above operative conditions, in the bottom portion of the steamer the amount of steam subjected to condensation is negligible.

At the discharge from the steamer the presence of many polymer lumps is observed, due to the agglomeration of the polyolefin particles. As a consequence, there is a high risk to have the discharge line plugged by the polymer lumps.

### Drying step b)

The polyolefin enters the upper portion of the drier 8 at a temperature of 120°C. Inside the drier the polymer particles are maintained in fluidization conditions by an upward flow of dry nitrogen. About 13000 m³/h of dry nitrogen at a temperature of 110°C are fed to a fluidization grid placed at the bottom part of the drier 8. The fluidization conditions results unstable and difficult to adjust due to the presence of polymer lumps.

The average residence time of the polymer in the drier is of 17 minutes. 500 g of dried polyolefin are taken downstream the drier and are partitioned so as to withdraw a representative sample of 3 g, which is subjected to "static head-space" extraction. As shown in Table 1, the residual amount of hydrocarbons dissolved in the polyolefin particles is equal to 600 ppm by weight.

In case of a sticky polyolefin, the use of superheated steam in the steamer gives rise to problems of polymer flowability during the steaming operation, with unacceptable formation of polymer lumps. Moreover, the efficiency in the removal of the hydrocarbons in the polyolefin is very low.

**TABLE 1**

| | **Amount of gas upstream steaming (ppm ^{w}t)** | **Amount of gas downstream drying (ppm wt)** |
|---|---|---|
| **Example 1** | **2500** | **12** |
| **Example 2** | **2130** | **8** |
| **Example 3 (Comparative)** | **2130** | **600** |

## Claims

1. A process to perform the finishing of a polyolefin produced by polymerization of one or more α-olefins, the process comprising:
(1) contacting a polyolefin discharged from a polymerization reactor with a counter-current flow of saturated steam, so as to strip away the gases from said polyolefin and to form condensed steam on the particles of said polyolefin, whereby the polyolefin granules are introduced in the upper portion of a steamer and fall down by gravity counter-currently contacting a stream of saturated steam introduced at the bottom of the steamer, and wherein the amount of said saturated steam ranges from 30 to 150 Kg per 1000 kg of polyolefin;
(2) drying the polyolefin particles by means of a counter-current flow of a dry inert gas, said flow of dry inert gas maintaining the polyolefin particles in fluidization conditions, the evaporation of said condensed steam cooling the polyolefin;
wherein the residence time of said polyolefin in step (1) is comprised between 10 and 45 minutes.

2. The process according to claim I, wherein during step (1) said polyolefin is subjected to heating.

3. The process according to claim 1, wherein at the inlet of step (1) the polyolefin temperature ranges from 60 to 95°C.

4. The process according to claim 1, wherein at the outlet of step (1) the polyolefin temperature ranges from 90 to 110°C.

5. The process according to claim 1, wherein at the outlet of step (2) the polyolefin temperature ranges from 75 to 95°C.

6. The process according to claim 1, wherein said amount of saturated steam exceeds of at least 50% by weight the amount of steam condensing on the polyolefin particles.

7. The process according to claim 1, wherein said flow of saturated steam in step (1) comprises an inert gas in an amount lower that 20% by weight.

8. The process according to claim 1, wherein steps (1) and (2) are performed continuously in a sequence of two separated vessels.

9. The process according to claim 1 and 9, wherein said polyolefin descends through the vessel of step (1) in "plug flow" conditions.

10. The process according to claim 1, wherein the steaming step (1) is operated at a temperature from 95 to 120°C and a pressure from 1 to 4 bar.

11. The process according to claim 1, wherein said dry inert gas is dry nitrogen at a temperature between 85°C and 115°C.

12. The process according to claim 1, wherein the residence time of the polyolefin in step (2) is comprised between 2 and 15 minutes.

## Patentansprüche

1. Verfahren zum Durchführen der Endbearbeitung eines Polyolefins, das durch Polymerisieren eines oder mehrerer α-Olefine hergestellt wird, wobei das Verfahren Folgendes umfasst:
(1) das Kontaktieren eines Polyolefins, das aus einem Polymerisationsreaktor abgelassen wird, mit einem Gegenstrom von gesättigtem Dampf, um die Gase von dem Polyolefin abzuziehen und kondensierten Dampf auf den Teilchen des Polyolefins zu bilden, wobei das Polyolefingranulat in den oberen Teil eines Dampfkessels eingeführt wird und durch Schwerkraft herunterfällt, wobei es einen Strom von gesättigtem Dampf, der am Boden des Dampfkessels eingeführt wird, im Gegenstrom kontaktiert und wobei die Menge des gesättigten Dampfes im Bereich von 30 bis 150 kg pro 1000 kg Polyolefin liegt;
(2) das Trocknen der Polyolefinteilchen durch einen Gegenstrom eines trockenen inerten Gases, wobei der Strom von trockenem inertem Gas die Polyolefinteilchen im Fluidisierungszustand hält, wobei die Verdampfung des kondensierten Dampfes das Polyolefin abkühlt;
wobei die Aufenthaltszeit des Polyolefins in Schritt (1) zwischen 10 und 45 Minuten liegt.

2. Verfahren nach Anspruch 1, wobei während Schritt (1) das Polyolefin Erhitzen unterworfen wird.

3. Verfahren nach Anspruch 1, wobei am Einlass von Schritt (1) die Polyolefintemperatur im Bereich von 60 bis 95°C liegt.

4. Verfahren nach Anspruch 1, wobei am Auslass von Schritt (1) die Polyolefintemperatur im Bereich von 90 bis 110°C liegt.

5. Verfahren nach Anspruch 1, wobei am Auslass von Schritt (2) die Polyolefintemperatur im Bereich von 75 bis 95°C liegt.

6. Verfahren nach Anspruch 1, wobei die Menge an gesättigtem Dampf die Menge an Dampf, der sich auf den Polyolefinteilchen kondensiert, um mindestens 50 Gew.-% übersteigt.

7. Verfahren nach Anspruch 1, wobei der Strom von gesättigtem Dampf in Schritt (1) ein inertes Gas in einer Menge von weniger als 20 Gew.-% umfasst.

8. Verfahren nach Anspruch 1, wobei die Schritte (1) und (2) kontinuierlich in einer Reihenfolge von zwei getrennten Gefäßen durchgeführt werden.

9. Verfahren nach Anspruch 1 und 9, wobei das Polyolefin durch das Gefäß von Schritt (1) unter "Pfropfenstrom-" Bedingungen absinkt.

10. Verfahren nach Anspruch 1, wobei der Dampfbehandlungsschritt (1) bei einer Temperatur von 95 bis 120°C und einem Druck von 1 bis 4 bar durchgeführt wird.

11. Verfahren nach Anspruch 1, wobei das trockene inerte Gas trockener Stickstoff bei einer Temperatur von 85 bis 115°C ist.

12. Verfahren nach Anspruch 1, wobei die Aufenthaltszeit des Polyolefins in Schritt (2) 2 bis 15 Minuten beträgt.

## Revendications

1. Procédé pour réaliser la finition d'une polyoléfine produite par polymérisation d'une ou plusieurs α-oléfines, le procédé comprenant :
(1) la mise en contact d'une polyoléfine évacuée d'un réacteur de polymérisation avec un flux à contre-courant de vapeur saturée, de manière à retirer par extraction les gaz de ladite polyoléfine et à former une vapeur condensée sur les particules de ladite polyoléfine, les granules de polyoléfine étant introduits dans la partie supérieure d'un vaporisateur et tombant sous l'effet de la gravité en entrant en contact à contre-courant avec un courant de vapeur saturée introduit au fond du vaporisateur, et la quantité de ladite vapeur saturée se situant dans la plage de 30 kg à 150 kg par kg de polyoléfine ;
(2) le séchage des particules de polyoléfine au moyen d'un flux à contre-courant d'un gaz inerte sec, ledit flux de gaz inerte sec maintenant les particules de polyoléfine dans des conditions de fluidisation, l'évaporation de ladite vapeur condensée refroidissant la polyoléfine ;
le temps de séjour de ladite polyoléfine dans l'étape (1) étant compris entre 10 et 45 minutes.

2. Procédé selon la revendication 1, ladite polyoléfine étant soumise à un chauffage pendant l'étape (1).

3. Procédé selon la revendication 1, la température de la polyoléfine se situant dans la plage de 60 à 95°C à l'entrée de l'étape (1).

4. Procédé selon la revendication 1, la température de la polyoléfine se situant dans la plage de 90 à 110°C à la sortie de l'étape (1).

5. Procédé selon la revendication 1, la température de la polyoléfine se situant dans la plage de 75 à 95°C à la sortie de l'étape (2).

6. Procédé selon la revendication 1, ladite quantité de vapeur saturée dépassant d'au moins 50% en poids la quantité de vapeur se condensant sur les particules de polyoléfine.

7. Procédé selon la revendication 1, ledit flux de vapeur saturée dans l'étape (1) comprenant un gaz inerte en une quantité inférieure à 20% en poids.

8. Procédé selon la revendication 1, les étapes (1) et (2) étant réalisées de manière continue dans une séquence de deux récipients séparés.

9. Procédé selon la revendication 1 et 9, ladite polyoléfine descendant à travers le récipient de l'étape (1) dans des conditions "d'écoulement en bouchon".

10. Procédé selon la revendication 1, l'étape (1) de soumission à la vapeur étant exploitée à une température de 95 à 120°C et à une pression de 1 à 4 bars.

11. Procédé selon la revendication 1, le gaz inerte sec étant de l'azote sec à une température entre 85°C et 115°C.

12. Procédé selon la revendication 1, le temps de séjour de la polyoléfine dans l'étape (2) étant compris entre 2 et 15 minutes.
